**Europäisches Patentamt**

**European Patent Office**

**Office européen des brevets**

(19)

(11) Veröffentlichungsnummer: **0 134 839**
**B1**

## (12) EUROPÄISCHE PATENTSCHRIFT

(45) Veröffentlichungstag der Patentschrift:
08.03.89

(21) Anmeldenummer: 83111123.2

(22) Anmeldetag: 08.11.83

(51) Int. Cl.⁴: **F 16 F 13/00,** B 60 K 5/12

(54) **Hydraulisch bedämpftes Motorlager.**

(30) Priorität: 24.08.83 DE 3330462

(43) Veröffentlichungstag der Anmeldung:
27.03.85 Patentblatt 85/13

(45) Bekanntmachung des Hinweises auf die Patenterteilung:
08.03.89 Patentblatt 89/10

(84) Benannte Vertragsstaaten:
DE FR GB IT

(56) Entgegenhaltungen:
EP-A-0 057 774
EP-A-0 075 807
DE-A-1 300 367
US-A-2 387 066

PATENTS ABSTRACTS OF JAPAN, Band 6, Nr. 172
(M-154) 1050 , 7. September 1982; & JP-A-57 84 222
(AISHIN SEIKI K.K.) 26.05.1982

(73) Patentinhaber: **Firma Carl Freudenberg, Höhnerweg**
**4, D-6940 Weinheim/Bergstrasse (DE)**

(72) Erfinder: **Ticks, Gerd- Heinz, Am Wetzel 10, D-6948**
**Waldmichelbach (DE)**
Erfinder: **Grassmuck, Volker, Ahornstrasse 36,**
**D-6940 Weinheim (DE)**

(74) Vertreter: **Weissenfeld- Richters, Helga, Dr.,**
**Höhnerweg 2, D-6940 Weinheim/Bergstrasse (DE)**

**Beschreibung**

Hydraulisch bedämpftes Motorlager, enthaltend ein Auflager, das durch einen kreisringförmig ausgebildeten Federkörper auf einem Traglager abgestützt ist, das Zwei Anschläge aufweist, die in Bewegungsrichtung einen Abstand voneinander und in der Ruhestellung von den Gegenanschlägen eines Mitnehmers haben, bei dem der Mitnehmer in einer Membrane festgelegt ist, bei dem die Membrane und das Traglager einen Arbeitsraum umschließen, bei dem ein Ausgleichsraum vorgesehen ist und bei dem der Arbeitsraum und der Ausgleichsraum mit einer Flüssigkeit gefüllt und durch eine Drosselöffnung verbunden sind.

Ein solches hydraulisch bedämpftes Motorlager ist aus US-A-2 387 066 bekannt. Der Federkörper begrenzt unmittelbar den Arbeitsraum. Bei Einleitung hochfrequenter Schwingungen kann es dadurch zu einer dynamischen Verhärtung kommen, und damit zu deren Übertragung auf das Traglager und die angrenzenden Maschinenteile. Insbesondere in einem Kraftfahrzeug machen sich derartige Schwingungen als Dröhnschwingungen außerordentlich störend bemerkbar.

Die Anschläge und Gegenanschläge sind bei dem vorstehend angesprochenen Hydrolager innerhalb des flüssigkeitsgefüllten Arbeitsraumes angeordnet. Sie umschließen ein relativ großes Flüssigkeitsvolumen, das bei einer Relativbewegung zwischen den Anschlägen und den Gegenanschlägen stets erneut beschleunigt und abgebremst werden muß. Eine Beeinträchtigung der Relativbeweglichkeit ist hiervon die Folge. Die entstehenden Geräusche können in bestimmten Anwendungen als störend empfunden werden. Weiterhin ist von Nachteil, daß Konturänderungen des Federkörpers, z. B. örtliche Aussparungen im Gummi zwecks Erreichen einer geringen Quersteifigkeit, eine wesentliche Verringerung der max. möglichen Dämpfung zur Folge haben.

Aus der JP-A-57/84222 ist ein hydraulisch bedämpftes Motorlager bekannt, bei dem der Ausgleichsraum durch eine auf einem säulenförmigen Gummikörper abgestützte Membrane begrenzt ist. Der Gummikörper weist eine umlaufende in sich geschlossene Einkerbung auf, deren axiale Begrenzungsflächen im unbelasteten Zustand des Motorlagers einen Abstand voneinander haben. Sie vermögen sich dadurch bei Einleitung von Schwingungen einer kleinen Amplitude relativ frei in bezug aufeinander zu bewegen, was eine gute Isolierung entsprechender Schwingungen ermöglicht. Gelangen die Begrenzungsflächen hingegen bei Einleitung von Schwingungen einer größeren Amplitude in einen gegenseitigen Berührungskontakt, dann ist eine hochgradige Dämpfung der Schwingungen die Folge.

Der gegenseitige Abstand der Begrenzungsflächen ist indessen in der vorbekannten Ausführung abhängig von der statischen Vorbelastung des Lagers. Es ist daher erforderlich, jede Modifizierung des Gewichtes der verschiedenen Verbrennungsmotoren unmittelbar bei der Konzeption des zugehörigen Motorlagers zu berücksichtigen, was die Wirtschaftlichkeit der Herstellung nachteilig beeinflußt.

Der Erfindung liegt die Aufgabe zugrunde, ein hydraulisch gedämpftes Motorlager der eingangs genannten Art derart weiterzuentwickeln, daß die genannten Nachteile nicht mehr auftreten. Das Motorlager soll insbesondere unabhängig von dem Gewicht des Motors bei Einleitung von Schwingungen einer hohen Frequenz frei von dynamischen Verhärtungen sein und es erlauben, Schwingungen in einer niedrigen Frequenz einzuleiten und unter Vermeidung einer störenden Geräuschentwicklung gut zu dämpfen.

Diese Aufgabe wird erfindungsgemäß mit den kennzeichnenden Merkmalen des Patentanspruchs 1 gelöst. Auf vorteilhafte Ausgestaltungen nehmen die Unteransprüche Bezug.

Bei der vorgeschlagenen Ausführung eines Motorlagers sind der Federkörper, die Anschläge und Gegenanschläge außerhalb der mit Flüssigkeit gefüllten Räume angeordnet und bilden keinerlei Bestandteil der diese Räume begrenzenden Wandungen. Ein sich in der Flüssigkeit aufbauender Druck kann sich daher nicht mehr auf die Teile auswirken. Die Walkbeanspruchung der Flüssigkeit ist stark vermindert. Durch die Gesamtheit dieser Maßnahmen wird erreicht, daß Schwingungen unterhalb einer bestimmten Amplitude über den Federkörper geleitet werden, ohne daß der Dämpfungsmechanismus und damit die Flüssigkeit bewegt wird. Das Übertragungsverhalten wird in diesem Fall einzig und allein von den Gummieigenschaften und der Formgebung des Federkörpers bestimmt. Bei der eingangs genannten Ausführung mußte die im Lager befindliche Flüssigkeit bei Einleitung von Schwingungen jeglicher Frequenz und Amplitude mitbewegt werden, was zu einer Erhöhung der dynamischen Federsteifigkeit und somit zu einer Verschlechterung der Übertragungscharakteristik führte. Kavitationsgeräusche konnten außerdem auftreten, was als störend empfunden wurde.

Bei größeren Amplituden wird der Dämpfungsmechanismus nach Überwindung des Freiweges zwischen den Anschlägen und Gegenanschlägen in Bewegung gesetzt und erzeugt die erwünschte Dämpfung. Der Freiweg zwischen Federkörper und Dämpfungsmechanismus ist so zu wählen, daß der Dämpfungsmechanismus lediglich im unteren Frequenzbereich zwischen 0 und ca. 30 Hz arbeitet.

Die Anschläge und/oder die Gegenanschläge können auf einer sich parallel zur Bewegungsrichtung erstreckenden Führung gelagert sein, wobei ein Dämpfungsglied für die Hemmung der Verschiebung vorgesehen ist. Die sich bei einer unterschiedlichen Belastung des Motorlagers ergebende unterschiedliche Einfederung des Auflagers wird hierdurch kompensiert, wodurch die mit der vorgeschlagenen Ausführung erzielten Vorteile belastungsunabhängig stets vorhanden sind. Das Dämpfungsglied darf die übrigen Funktionen des Motorlagers nicht beeinträchtigen. Es besteht nach einer vorteilhaften Ausgestaltung aus gegeneinander gepreßten Reibplatten, die gegebenenfalls zylindrisch ausgebildet sind und einander umschließen.

Anschläge und Gegenanschläge sind zweckmäßig in einem entlüfteten Raum angeordnet und so ausgebildet, daß eine gute Relativbeweglichkeit gewährleistet ist. Wenigstens eine der gegenseitigen Berührungsflächen soll deshalb in sich gewölbt oder reliefartig strukturiert sein. Hierdurch wird ein leichtes Loslösen nach der Berührung begünstigt.

Weiterhin ist von Vorteil, daß die Gestaltung des Federkörpers keinerlei Einfluß auf den Dämpfungsmechanismus hat, d.h., im Federkörper können Aussparungen, ja sogar Durchbrüche, angeordnet werden, um bestimmte gewünschte Steifigkeiten in den einzelnen Richtungen zu erzielen.

Zwischen den Anschlägen und Gegenanschlägen, die den Freiweg bilden, können Dämpfungsschichten angeordnet sein, die den übergang von ungedämpfter zu gedämpfter Bewegung fließender machen. Dabei hat es sich als vorteilhaft bewährt, wenn die Dämpfungsschichten aus in axialer Richtung vorspringenden, elastischen Noppen bestehen, die mit den Anschlägen und/oder den Gegenanschlägen verbunden sind.

Der Gegenstand der vorliegenden Erfindung wird nachfolgend anhand der in der Anlage beigefügten Zeichnung weiter erläutert. Es zeigen:

Figur 1 eine Ausführung bei der die Gegenanschläge in Bewegungsrichtung verschiebbar auf dem Mitnehmer gelagert sind.

Figur 2 das Motorlager nach Figur 1 in durch den Ausgleichsraum quergeschnittener Darstellung.

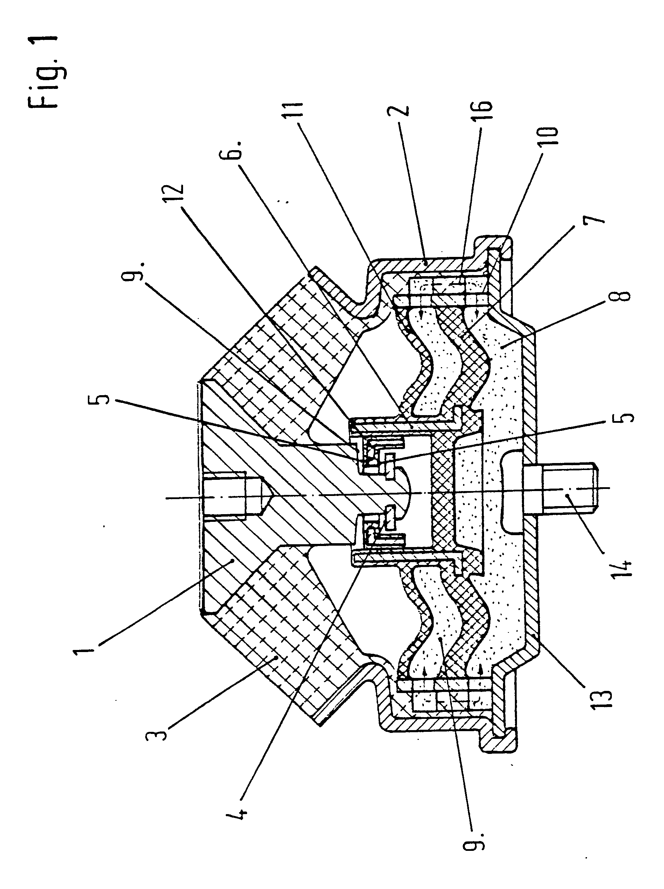

Das hydraulisch bedämpfte Motorlager nach Figur 1 hat eine rotationssymmetrische Gestalt. Es läßt sich dadurch raumsparend in einem Kraftfahrzeug unterbringen.

Das Motorlager besteht im oberen Teil aus dem Auflager 1, das durch ein Drehteil aus Stahl gebildet wird. Dieses enthält eine von der Oberfläche her senkrecht eindringende Gewindebohrung zur Befestigung des abzustützenden Motors. Im unteren Teil springt ein zylindrischer Zapfen in Bewegungsrichtung vor, der die dem Mitnehmer 6 zugehörigen Gegenanschläge 5 mit zwei sich quer zur Bewegungsrichtung erstreckenden Anschlägen 4 in einem Abstand umschließt.

Der Mitnehmer 6 enthält eine innenliegende, sich in Bewegungsrichtung erstreckende Führungsfläche, auf der die Gegenanschläge

5 aufweisende Winkelring 12 mit Reibschluß gelagert ist. Der untere der beiden Anschläge wird durch eine in einer Nut verankerte kreisringförmig ausgebildete Scheibe aus Stahl gebildet.

Das Auflager ist durch einen hohlkegelig ausgebildeten Federkörper 3 aus Gummi mit dem Traglager 2 verbunden. Dieses ist zweiteilig ausgebildet und enthält im unteren Teil die flüssigkeitsdicht eingebördelte Tragplatte 13 mit dem für die Festlegung an einer Kraftfahrzeugkarosserie bestimmten Gewindezapfen 14. Beide Teile des Traglagers gemeinsam umschließen eine Einrichtung, die es erlaubt, niederfrequente Schwingungen einer großen Amplitude auf hydrodynamischem Wege zu bedämpfen.

Zu diesem Zwecke ist der Mitnehmer 6 an einer Membrane 7 festgelegt, die gemeinsam mit dem Mitnehmer und dem Traglager einen Arbeitsraum 8 umschließt, der durch eine Drosselöffnung 10 mit einem Ausgleichsraum 9 verbunden ist.

Der Ausgleichsraum 9 ist in Bewegungsrichtung zwischen dem Arbeitsraum und dem Federkörper angeordnet und von diesem durch einen gasgefüllten Hohlraum 15 schwingungstechnisch isoliert. Der Hohlraum ist im Regelfalle durch eine nicht dargestellte Entlastungsöffnung mit der Außenluft verbunden, so daß sich in ihm bei einer Einfederung des Auflagers 1 kein Druck aufbauen kann. Der Federkörper 3 ist dadurch von entsprechenden Kräften stets entlastet. Er vermag in jeder Situation frei zu federn und erfährt keinerlei Beeinflussung durch die Flüssigkeit des nachgeschalteten Dämpfungsmechanismus.

Genauso übt der Federkörper 3 keinerlei Einfluß auf den Dämpfungsmechanismus aus, d.h. die Gestaltung dieses Federkörpers 3 kann beliebig verändert werden, ohne daß dadurch der Dämpfungsmechanismus beeinträchtigt wird.

Werden z. B. unterschiedliche Federsteifigkeiten in Längs und Querrichtung des Lagers gefordert, so kann dies durch örtliche Durchbrüche oder Aussparungen problemlos erreicht werden.

Die den Arbeitsraum 8 und den Ausgleichsraum 9 verbindende Drosselöffnung 10 hat einen spiraligen Verlauf und kann durch Verdrehen des Düseneinsatzes 16 in ihrer Lage und ihrem Querschnitt verändert werden. Die beiderseitigen Mündungen sind einander unter einem Winkel von etwa 180° zugeordnet, was es erlaubt, zwei ausgebildete Drosselöffnungen 10 auf dem Umfang zu verteilen und zwei nebeneinanderliegenden Arbeits- und Ausgleichsräumen zuzuordnen, die durch wenigstens eine Drosselöffnung verbunden sind. Dadurch wird erreicht, daß auch in der horizontalen Richtung eine Dämpfung vorhanden ist, wenn z. B. Flüssigkeit aus der linken Hälfte der Kammern in die rechte transportiert wird.

Zur Funktion ist folgendes auszuführen:

Bei Einleitung von Schwingungen einer hohen Frequenz und kleinen Amplitude wird die gesamte Relativbewegung ausschließlich von dem Federkörper 3 aufgenommen. Zwischen Anschlägen und Gegenanschlägen findet keinerlei Bewegungsübertragung statt. Die Schwingungen können dadurch gut isoliert werden.

Bei Einleitung von Schwingungen einer großen Amplitude und kleinen Frequenz kommen die Anschläge 4 demgegenüber an den Gegenanschlägen 5 des Mitnehmers 6 zur Anlage und bewirken die Übertragung der Schwingung auf die Membrane 7 und somit auf den Dämpfungsmechanismus. Bei einer Einfederung des Auflagers wird dadurch Flüssigkeit aus dem Arbeitsraum 8 durch die Drosselöffnung 10 in den Ausgleichsraum 9 gepreßt, wobei es zu der erwünschten Dämpfung kommt. Der Ausgleichsraum 9 ist durch eine elastische Begrenzungswand 11 abgedichtet. Bei einer Ausfederung wird dadurch das in dem Ausgleichsraum 9 enthaltene Flüssigkeitsvolumen durch die Drosselöffnung 10 zurück in den Arbeitsraum 8 befördert. Auch hierbei findet eine entsprechende Dämpfung statt.

Es ergibt sich nun eine stärkere Belastung des Auflagers 1, wie beispielsweise beim Aufbringen eines Motors von anderem Gewicht, so verschiebt sich der Winkelring 12 in Bewegungsrichtung auf der Führungsfläche des Mitnehmers 6 und nimmt eine der Einfederung des Auflagers 1 entsprechende Position ein. Er behält diese Position unter Betriebsbedingungen stets bei, wodurch die sich anschließend ergebende Funktion vollständig mit der vorstehend beschriebenen übereinstimmt. Die Gegenschläge 5 weisen eine Beschichtung aus Gummi auf, um eine Geräuschentwicklung bei Berührung durch die Anschläge 4 zu unterdrücken.

Es ist nicht von einer funktionswesentlichen Bedeutung, daß der Ausgleichsraum 9 zwischen dem Arbeitsraum 8 und dem Federkörper 3 angeordnet ist, eine entsprechende Zuordnung ermöglicht aber eine besonders kostengünstige Herstellung und raumsparende Bauweise. Sie wird daher bevorzugt. Eine andere Zuordnung ist ohne weiteres möglich.

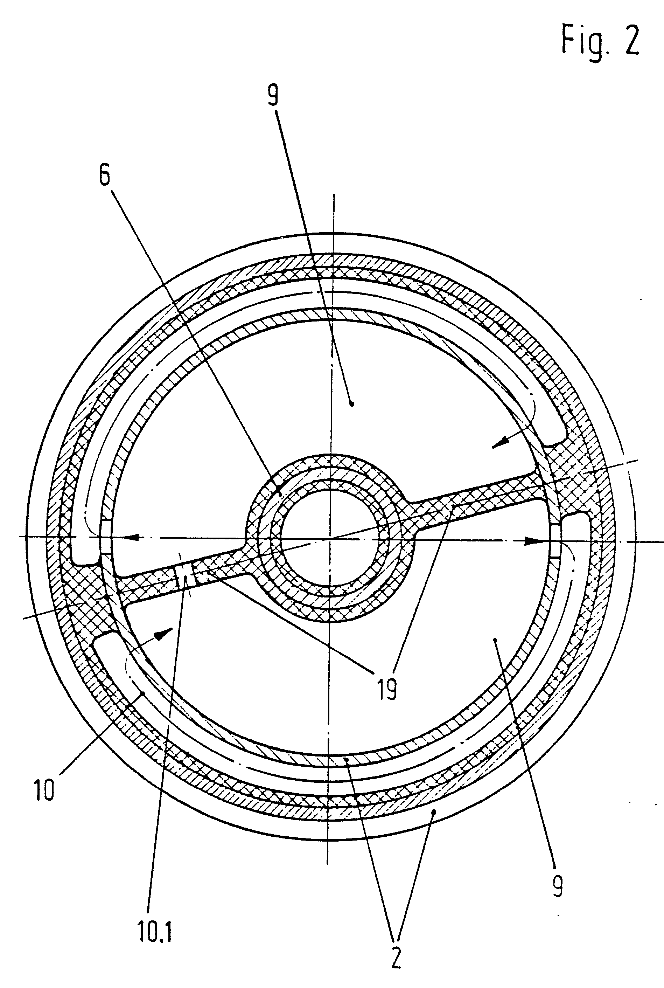

Figur 2 zeigt das Motorlager aus Figur 1 in einer quer durch den Ausgleichsraum 9 geschnittenen Darstellung. Dieser ist durch eine elastische Trennwand 19 in zwei gleich große Teilräume unterteilt. Die Teilräume sind durch eine die Trennwand 19 durchbrechende Drosselöffnung 10.1 verbunden, der Mitnehmer 6 durch nicht dargestellte Maschinenteile mit dem ebenfalls nicht gezeigten Auflager 1. In dieses eingeleitete Schwingungen quer zur Erstreckung der Trennwand werden daher auf den Mitnehmer 6 übertragen. Sie führen zu einer Flüssigkeitsverdrängung durch die Drosselöffnung entgegen der Bewegungsrichtung. Eine Dämpfung entsprechender Schwingungen ist hiervon die Folge. Sie ist ohne Einfluß auf die vorstehend beschriebene Funktion des Motorlagers bei Einleitung von Schwingungen in senkrechter Richtung. Die Dämpfung großer Amplituden erfolgt in diesem Falle durch Überströmung von Dämpfungsflüssigkeit über die den Ausgleichsraum und Arbeitsraum gemeinsam umschließenden und verbindenden Drosselöffnungen 10.

## Bezugszeichenliste

1 Auflager
2 Traglager
3 Federkörper
4 Anschläge
5 Gegenanschläge
6 Mitnehmer
7 Membrane
8 Arbeitsraum
9 Ausgleichsraum
10 Drosselöffnung
11 Begrenzungswand
12 Winkelring
13 Tragplatte
14 Gewindezapfen
15 Hohlraum
16 Düseneinsatz
17 Durchbruch
18 Aussparung
19 Trennwand

## Patentansprüche

1. Hydraulisch bedämpftes Motorlager, enthaltend ein Auflager (1), das durch einen kreisringförmig ausgebildeten Federkörper (3) auf einem Traglager (2) abgestützt ist und zwei Anschläge aufweist, die in Bewegungsrichtung einen Abstand voneinander und in der Ruhestellung von den Gegenanschlägen (5) eines Mitnehmers (6) haben, bei dem der Mitnehmer an einer Membrane (7) festgelegt ist, bei dem die Membrane und das Traglager einen Arbeitsraum (8) umschließen, bei dem ein Ausgleichsraum (9) vorgesehen ist und bei dem der Arbeitsraum und der Ausgleichsraum mit einer Flüssigkeit gefüllt und durch eine Drosselöffnung verbunden sind, dadurch gekennzeichnet, daß der Federkörper (3), die Anschläge (4) und die Gegenanschläge (5) außerhalb der mit Flüssigkeit gefüllten Räume (8, 9, 10) angeordnet sind und dieselbe nicht begrenzen, daß die Anschläge und/oder die Gegenanschläge auf einer sich parallel zur Bewegungsrichtung erstreckenden Führung des Mitnehmers (6) gelagert sind und daß ein Dämpfungsglied für die Hemmung der Verschiebung vorgesehen ist.

2. Motorlager nach Anspruch 1, dadurch gekennzeichnet, daß das Dämpfungsglied aus gegeneinander gepreßten Reibplatten besteht

3. Motorlager nach Anspruch 1 - 2, dadurch gekennzeichnet, daß zwischen den Anschlägen (4) und den Gegenanschlägen (5) Dämpfungsschichten angeordnet sind

4. Motorlager nach Anspruch 3, dadurch gekennzeichnet, daß die Dämpfungsschichten aus in axialer Richtung vorspringenden, elastischen Noppen bestehen, die mit den Anschlägen und/oder den Gegenanschlägen verbunden sind.

5. Motorlager nach Anspruch 1, dadurch gekennzeichnet, daß Arbeitsraum (8) und/oder der Dämpfungsraum jeweils durch wenigstens eine Trennwand geteilt sind, und daß die beiderseits an die Trennwand angrenzenden Teilräume durch wenigstens eine Drosselöffnung verbunden sind.

## Claims

1. A hydraulically damped engine support, comprising a resting support (1), which is supported by a spring body (3) of annular design on a bearing support and has two stops, which are spaced from each other in the direction of movement and, in the rest position, from the counter-stops (5) of a driver (6), in which the driver is fixed on a diaphragm (7), in which the diaphragm and the bearing support enclose a working space (8), in which a compensating space (9) is provided and in which the working space and the compensating space are filled with a fluid and are connected by a throttling orifice, characterized in that the spring body (3), the stops (4) and the counter-stops (5) are arranged outside the spaces (8, 9, 10) filled with fluid and do not bound the latter, in that the stops and/or the counter-stops are mounted on a guide of the driver (6) extending parallel to the direction of movement and in that a damping element is provided for restraint of the displacement.

2. An engine support according to claim 1, characterized in that the damping element is composed of friction plates pressed against each other.

3. An engine support according to either of claims 1 or 2, characterized in that damping layers are arranged between the stops (4) and the counter-stops (5).

4. An engine support according to claim 3, characterized in that the damping layers are composed of resilient studs projecting in axial direction, which are connected to the stops and/or to the counter-stops.

5. An engine support according to claim 1, characterized in that working space (8) and/or the damping space are in each case divided by at least one partition, and in that the compartments adjacent to the partition on either side are connected by at least one throttling orifice.

## Revendications

1. Support de moteur à amortissement hydraulique contenant un palier (1) qui est supporté par un corps élastique (3) de forme annulaire sur un palier d'appui (2) et qui présente deux butées qui sont situées à une certaine distance l'une de l'autre dans la direction du mouvement et à une certaine distance, en position de repos, des contre-butées (5) d'un poussoir (6), dans lequel le poussoir est fixé à une membrane (7) tandis que la membrane et le palier d'appui entourent un espace de travail (8), qu'un espace d'équilibrage (9) est prévu et que l'espace de travail et l'espace d'équilibrage sont remplis d'un liquide et sont reliés par un orifice d'étranglement, caractérisé en ce que le corps élastique (3), les butées (4) et les contre-butées (5) sont situés en dehors des espaces (8, 9, 10) remplis de liquide et ne délimitent pas ceux-ci, que les butées et/ou les contre-butées sont montées sur un guide du poussoir (6) s'étendant parallèlement à la direction du mouvement,et en ce qu'un élément d'amortissement est prévu pour entraver le déplacement.

2. Support de moteur selon la revendication 1, caractérisé en ce que l'élément d'amortissement est constitué de plaques de frottement pressées l'une contre l'autre.

3. Support de moteur selon les revendications 1 et 2, caractérisé en ce que les couches d'amortissement sont disposées entre les butées (4) et les contre-butées (5).

4. Support de moteur selon la revendication 3, caractérisé en ce que les couches d'amortissement sont constituées de boutons élastiques faisant saillie en direction axiale et qui sont reliés aux butées et/ou au contre-butées.

5. Support de moteur selon la revendication 1, caractérisé en ce que 1 espace de travail (8) et/ou l'espace d'amortissement sont séparés par au moins une paroi séparatrice et en ce que les espaces partiels situés de part et d'autre de cette paroi séparatrice sont reliés par au moins un orifice d'étranglement.

Fig. 1

EP 0 134 839 B1

Fig. 2